# FASCICULE DE BREVET EUROPEEN

(11) **EP 3 214 565 B1**
(45) Date de publication et mention de la délivrance du brevet: **07.07.2021**
(21) Numéro de dépôt: 17158540.9
(22) Date de dépôt: 28.02.2017
(51) Int. Cl.: G06F 21/53, G06F 21/55, G06F 21/62

(54) **PROCÉDÉ DE MODULATION D'ACCÈS À UNE RESSOURCE, DISPOSITIF ET PROGRAMME CORRESPONDANT**
MODULATIONSVERFAHREN DES ZUGANGS ZU EINER QUELLE, ENTSPRECHENDE VORRICHTUNG UND ENTSPRECHENDES PROGRAMM
METHOD OF CONTROLLING ACCESS TO A RESOURCE, DEVICE AND CORRESPONDING PROGRAM

(30) Priorité: 01.03.2016 FR 1651714
(43) Date de publication de la demande: 06.09.2017
(73) Titulaire: INGENICO GROUP, 75015 Paris (FR)
(72) Inventeur: NACCACHE, David, 75016 Paris (FR); GERAUD, Rémi, 75018 Paris (FR)
(74) Mandataire: Vidon Brevets & Stratégie

(56) Documents cités:
- US-A1- 2012 159 103
- US-A1- 2014 123 139
- XIAOXIN CHEN ET AL: "Overshadow", PROCEEDINGS OF THE 13TH INTERNATIONAL CONFERENCE ON ARCHITECTURAL SUPPORT FOR PROGRAMMING LANGUAGES AND OPERATING SYSTEMS, 1 mars 2008 (2008-03-01), pages 2-13, XP055313231, DOI: 10.1145/1346281.1346284 ISBN: 978-1-59593-958-6

## Description

### 1. Domaine

L'invention se rapporte au contrôle d'accès. L'invention se rapporte plus particulièrement au contrôle d'accès à des ressources informatiques. Plus spécifiquement encore, l'invention se rapporte au contrôle d'accès, à des ressources informatiques, par des applications s'exécutant sur un dispositif électronique.

La présente technique propose une solution au problème du contournement, par des applications malveillantes, de barrières mises en place contre leur communication lorsqu'elles sont exécutées sur un ou plusieurs processeurs d'un dispositif électronique.

### 2. Art antérieur

La majeure partie des systèmes d'exploitation modernes dispose de mécanismes pour empêcher la communication directe entre les processus indépendants. Ces systèmes d'exploitation offrent des fonctionnalités de contrôle de la communication interprocessus strictes. Des technologies comme de l'isolation des processus (par exemple adressage virtuel, *« sandboxing »*) peuvent être mises en œuvre dans le logiciel ou le matériel. On précise que pour la suite et pour ce qui précède, les termes « application », « programme » et « processus » sont considéré comme équivalents, bien que présentant des différences plus ou moins importantes.

Il est essentiel, pour des applications manipulant des données sensibles où effectuant des traitements sécurisés, qu'une autre application ne puisse pas voler ces données sensibles, et plus généralement qu'il ne soit pas possible d'exfiltrer les données sensibles. Certains types de dispositifs, comme les terminaux de paiement, mettent en place des barrières logiques pour interdire une telle communication, connus sous le nom de « firewalls », en n'autorisant que certaines applications bien définies à partager de l'information via un mécanisme (« IPC », inter-process communication) régi par la politique de sécurité du dispositif.

Il existe cependant des techniques qui permettent de contrecarrer ces mesures de protection. Ces techniques exploitent par exemple la table des processus gérée par le système d'exploitation.

La table des processus est une structure de données qui est gérée dans la mémoire vive du dispositif (terminal, ordinateur, smartphone, tablette). Cette table comprend des informations sur les processus actuellement traités par le système d'exploitation, et notamment l'identifiant de ces processus. Cette information est généralement considérée comme inoffensive et est visible de tous les processus et de tous les utilisateurs. Quelques exceptions, dans des systèmes spécifiques existent. Cependant, dans la grande majorité des cas, cette information est visible et exploitable.

Ainsi, les protections logiques en place sont inopérantes face à de nouvelles attaques ciblant de telles informations auxiliaires *(side-channel attacks). Outre la table d'identifiant, d'autres informations peuvent également être exploitées, comme la* charge de calcul du processeur (« load »), utilisation des ressources partagées, informations sur les processus en cours, etc.

Ainsi, par exemple lorsqu'un programme est exécuté, il reçoit un numéro d'identifiant qui est enregistré dans la table des processus. Cette table est consultable par toutes les applications. En décidant de lancer ou non ce programme, il est possible à une application de transmettre un 0 ou un 1.

De plus, dans le cas d'un système d'exploitation temps-réel (RTOS), l'utilisation d'informations physiques (charge processeur, mémoire disponible, etc.) et l'exécution simultanée de plusieurs applications rend aisée la communication de ces informations.

Or, de plus en plus fréquemment, des types de dispositifs qui étaient autrefois uniquement dédiés à la mise en œuvre de fonctions sécurisés (comme les terminaux de paiement) proposent également la mise en œuvre de fonctions non sécurisées. De telles possibilités de mises en œuvre sont requises par les clients de ces dispositifs : ils souhaitent à la fois pouvoir exécuter des applications sécurisées et des applications non sécurisées (de type publicitaire, par exemple pour les terminaux de paiement).

Il est cependant difficile de contrôler l'ensemble des applications installées (des applications multimédia par exemple peuvent être créées par des tierces parties, qui ne sont pas contrôlées par le fabriquant du dispositif). Il en résulte qu'une ou plusieurs applications malveillantes peuvent potentiellement être installées sur des dispositifs qui mettent en œuvre des fonctions sécurisées. Ces applications malveillantes ne peuvent pas, normalement, communiquer avec des programmes ou des processus sécurisés (du fait de la mise en place de mécanismes de contrôle de communication inter-process), mais elles peuvent obtenir des informations secondaires permettant de déduire d'autres informations confidentielles. L'article "Oversahdow, A Virtualization-Based Approach to Retrofitting", Protection in Commodity Operating Systems by Xiaoxin Chen et al, divulgue un procédé permettant de protéger l'accès aux ressources par des applications. Ce procédé utilise une primitive de masquage, en anglais "cloaking", qui offre une vue différente des ressources aux applications et au système d'exploitation.

US2012159103 divulgue un procédé spécifiquement adapté à la protection contre les canaux auxiliaires. Ce procédé implémente une pagination furtive qui empêche à des applications malveillantes d'accéder à la mémoire physique qui correspondrait aux mêmes lignes de cache que celles utilisées par la page furtive allouée à l'application protégée.

Il est donc nécessaire de proposer une solution qui permette de rendre plus difficile l'obtention et la compréhension d'informations secondaires, mais néanmoins importantes, dans le cadre d'une exploitation malveillante de ces informations par différents processus.

### 3. Résumé

La technique proposée permet d'éviter au moins certains des inconvénients de l'art antérieur. La technique proposée permet ainsi d'obfusquer les comportements procéduraux et tromper les applications malveillantes.

Plus particulièrement, il est décrit un procédé de contrôle d'accès à des ressources préalablement identifiées, selon la revendication indépendante 1.

Ainsi, à la différence des techniques antérieures, il est possible de changer l'accès à une ressource donnée, en fonction de paramètres qui lui sont attachés, dans le système d'exploitation, ou dans une table de ressources du système d'exploitation. Il est ainsi possible de ne pas donner un accès direct à partir du système d'exploitation, au ressources, mais d'en quelque sorte flouter l'accès à la ressource en fonction de paramètres spécifiques d'accès.

L'étape d'obtention d'au moins un paramètre comprend :
- une étape d'identification de la ressource courante dans la structure de données de caractérisation de ressources en fonction d'un identifiant de ressource ;
- une étape d'obtention, au sein de ladite structure de données, d'un indicateur de sémanticité et d'au moins un paramètre de modulation.

L'indicateur de sémanticité est une représentation du caractère sémantique ou non d'une ressource.

Selon un mode de réalisation particulier, en fonction de l'indicateur de sémanticité, l'étape de modulation, comprend :
- une mise en œuvre d'une étape de masquage de donnée non sémantique ; ou
- une mise en œuvre d'une étape de masquage de donnée sémantique.
- l'une et l'autre de ces deux étapes de masquage est mise en œuvre en fonction des paramètres de modulation.

Ainsi, la modulation est de nature paramétrique. Il est ainsi possible de moduler l'accès aux ressources en fonction de leurs caractéristiques sémantiques. Cela simplifie et augmente l'efficacité du masquage (du floutage) de manière importante. Cela évite également, au passage, qu'un attaquant discerne un schéma de masquage. En effet, comme toutes les modulations d'accès aux ressources sont paramétrées, il est possible de différentier les traitements préalables à l'accès à chacune d'entre elles.

Selon un mode de réalisation particulier, l'étape de masquage de donnée non sémantique comprend :
- une étape d'obtention d'un code cA correspondant au programme ;
- une étape de calcule d'un chiffré *C_{RX}* = *E(RC, cA)* de la ressource courante par *cA* ;
- une étape de transmission du chiffré *C_{RX}* audit programme ;

Ainsi, de manière très inhabituelle, au lieu de transmettre une ressource au programme appelant, on transmet un chiffré de la ressource, dont à priori, le programme ne peut rien faire. Ce n'est que lorsque le programme requiert un accès effectif à cette ressource que cette dernière sera déchiffrée par le système d'exploitation. Ainsi, un programme malveillant, interceptant la ressource chiffrée transmise ne peut pas avoir un accès réel à cette ressource à la place du programme appelant.

Selon un mode de réalisation particulier, l'étape de masquage de donnée non sémantique comprend :
- une étape de réception, en provenance du programme, d'un chiffré *C_{RX}* de la ressource courante *RC* ;
- une étape d'obtention d'un code *cA* correspondant au programme ;
- une étape de déchiffrement *RC* = *E¹(C_{RX}, cA)* délivrant la valeur de la ressource courante *RC ;*
- une étape de mise en œuvre d'une opération requise par le programme sur la ressource courante.

Ainsi, le programme appelant n'a pas d'accès direct à la ressource. Pour pouvoir obtenir une valeur associée à cette ressource, le programme appelant est obligé de passer par une étape de déchiffrement, étape qui est conduite par le système d'exploitation, sur requête du programme, en fonction du chiffré précédemment transmis.

Selon un autre aspect, il est également décrit un module de contrôle d'accès à des ressources préalablement identifiées selon la revendication indépendante 5.

De tels moyens se présentent par exemple sous la forme de circuits imprimés, de type FCPGA ou Micro-FCPGA par exemple, connectés entre eux par des circuits adéquats, et comprenant des mécanismes de protection contre l'intrusion. Ces mécanismes permettent d'assurer que le module ne peut pas faire l'objet (ou très difficilement) d'une attaque physique à son encontre.

Il est également décrit, selon un autre aspect, un dispositif électronique du type comprenant un processeur, une mémoire vive et une mémoire de stockage, dispositif comprenant également un système d'exploitation, s'exécutant au sein de la mémoire vive et permettant l'accès à des ressources dudit dispositif électronique. Un tel dispositif comprend au moins un module de contrôle d'accès auxdites ressources tels que décrit précédemment.

Selon une implémentation préférée, les différentes étapes des procédés selon l'invention sont mises en œuvre par un ou plusieurs logiciels ou programmes d'ordinateur, comprenant des instructions logicielles destinées à être exécutées par un processeur de données d'un dispositif selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de l'invention.

### 4. Dessins

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de la technique proposée ;
- la figure 2 présente un synoptique de la modulation de l'accès aux ressources ;
- la figure 3 décrit la modulation de l'accès à une ressource non sémantique ;
- la figure 4 décrit succinctement un dispositif de mise en œuvre.

### 5. Description

### 5.1. Rappel du principe général

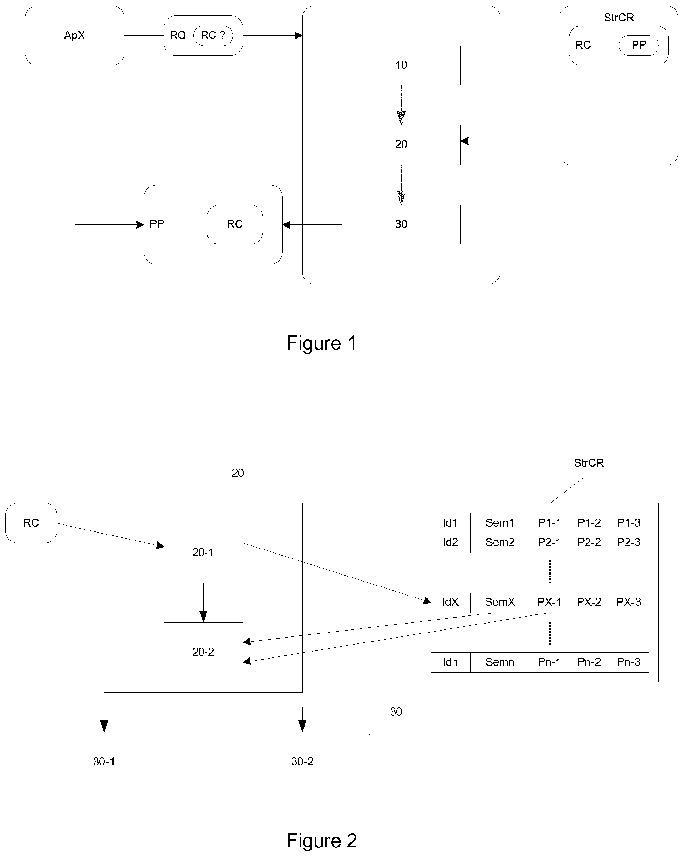

Comme explicité plus haut, on cherche à éviter qu'une application, ou un programme qui s'exécute sur un dispositif électronique, ne transmette ou ne reçoive des informations de la part du système d'exploitation et/ou de la part d'autres applications ou programmes. Le principe général de la technique est présenté en relation avec la figure 1. Ainsi, on met en œuvre une technique particulière, objet de la présente. Cette technique se matérialise sous la forme d'un procédé de contrôle d'accès à des ressources préalablement identifiées, le procédé comprenant une étape de réception (10), en provenance d'un programme (ApX), d'une requête d'accès (RQ) à une ressource courante (RC) ; une étape d'obtention (20) d'au moins un paramètre (PX) d'accès à ladite ressource (RC) courante au sein d'une structure de données de caractérisation de ressources (StrCR) ; une étape de modulation (30) d'accès à ladite ressource courante (RC) en fonction dudit au moins un paramètre d'accès (PX) préalablement obtenu. Ainsi, à la différence des techniques de l'art antérieur, dans lesquelles des barrières de communication interprocessus (ou inter programme ou inter application) sont élevées, le procédé de l'invention comprend la mise en œuvre d'une modulation d'accès aux ressources, a priori partagées, du système d'exploitation, afin d'éviter ou de rendre difficile, la corrélation d'information publiques pour un programme ou une application malveillante.

La structure de données sur laquelle la présente technique se base peut se présenter sous la forme d'une table, comprenant un identifiant de la ressource, un indicateur de sémanticité et un ou plusieurs paramètres de modulation d'accès. L'indicateur de sémanticité est une représentation du caractère sémantique ou non d'une ressource. Comme cela sera explicité postérieurement, en lien avec les différents modes de réalisation et variantes, les paramètres de modulation d'accès à la ressource peuvent se présenter sous la forme de clés de chiffrement, sous la forme de valeurs d'incrémentation ou de décrémentation ou encore sous la forme de nombre aléatoire. Le type de paramètre associé à un identifiant de ressource est prédéfini : le concepteur d'un système objet de la présente décide, lors de l'implémentation de ce système, du type de paramètre qui est associé à un identifiant de ressource donné. Par exemple pour un accès à un identifiant de processus, le type de paramètre est par exemple un chiffrement et le paramètre en tant que tel (c'est à dire sa valeur) est soit une clé de chiffrement préalablement déterminée par le concepteur soit un pointeur vers un générateur de clé de chiffrement (qui génère une clé à la volée, puis peut la stocker pour un usage futur destiné à cet identifiant de ressources). En d'autres termes, le principe général du système et du procédé proposé consiste en l'implémentation d'un mécanisme d'interruption spécifique, mécanisme mis en œuvre par le système d'exploitation, qui module de manière prédéterminée l'accès à des ressources appréhendables par le système d'exploitation en fonction de paramètre de modulation et d'un type de ressource.

De manière complémentaire, la modulation de l'accès aux ressources est accompagnée d'un mécanisme de blocage d'accès. Plus particulièrement, l'accès à une ressource donnée par un programme ou un processus s'accompagne d'un blocage de l'accès à cette ressource pour les autres programmes (ou processus). Ce blocage peut prendre plusieurs formes. Dans une configuration particulière, le blocage est bidirectionnel : aucun autre processus n'est autorisé à lire ou à écrire une valeur relative à la ressource lorsque celle-ci est utilisée par un processus courant. Dans une autre configuration particulière, le blocage est mono directionnel : seule une opération de la même nature que celle mise en œuvre par le processus courant est autorisée ; par exemple, en cas tentative d'accès à une même ressource, le module de contrôle d'accès n'autorise pas l'accès le processus courant à lire la ressource et un processus second à écrire sur cette même ressource en même temps. Une mise en œuvre détaillée de ce blocage est présentée par la suite.

### 5.2. Modulation d'accès aux ressources.

Dans la présente, on dispose d'un module de contrôle d'accès qui effectue la modulation d'accès aux ressources. Ce module est géré par le système d'exploitation. En fonction des configurations, ce module de contrôle est soit indépendant du système d'exploitation, soit directement intégré dans celui-ci. Le système d'exploitation fait appel à ce module lorsqu'il reçoit une requête d'accès à une ressource (par exemple de la part d'un processus). La requête d'accès à une ressource peut prendre la forme d'une interruption, comme c'est le cas dans certains systèmes d'exploitation, de type linux. D'autres mécanismes de requêtage peuvent également être mis en œuvre.

Le module, de son côté, dispose d'un accès à une table de ressources, dans laquelle au moins certaines ressources sont identifiées. Cette table des ressources comprend par exemple les identifiants de ressources que le fabriquant du dispositif considère comme étant potentiellement porteuses d'informations permettant de réaliser des attaques par canaux cachés. Parmi les ressources envisageables, on peut notamment citer la charge du processeur, les identifiants des processus (PID), la mémoire disponible, la date, l'heure, donnée d'horloge en règle générale, mais également entrée sonore, sortie sonore, périphérique de sortie (écran, imprimante), périphérique d'entrée (clavier), puissance de signal mesurée (signal sans fil WiFi, Bluetooth, NFC), etc.

Au sein de la table de ressources, on trouve, pour chaque ressource renseignée, un identifiant de ressource, une indication du caractère sémantique ou non de la ressource et un ou plusieurs paramètres permettant de moduler l'accès à cette ressource.

Le principe mis en œuvre dans le contrôle d'accès est présenté en relation avec la figure 2. L'étape d'obtention d'un paramètre comprend une étape d'identification (20-1) de la ressource courante (RC) dans la structure de données de caractérisation de ressources (StrCR) en fonction d'un identifiant de ressource (IdX) ; et une étape d'obtention (20-2) d'un indicateur de sémanticité (SemX) et d'au moins un paramètre de modulation (PX-1, PX-2, PX-3). En fonction de l'indicateur de sémanticité (SemX), l'étape de modulation (30), comprend soit la mise en œuvre d'une étape de masquage (30-1) de donnée non sémantique ; soit la mise en œuvre d'une étape de masquage (30-2) de donnée sémantique. L'une et l'autre de ces deux étapes de masquage est mise en œuvre en fonction des paramètres de modulation (PX-1, PX-2, PX-3).

Ainsi, lorsqu'une ressource est typée comme étant une ressource sémantique, la modulation consiste à transmettre aux processus une information entachée d'erreur (c'est à dire une information inexacte ou partiellement inexacte). Ainsi, toute ressource partagée par au moins deux applications, possédant une valeur sémantique (e.g. mémoire disponible) est entachée d'une erreur. Cette erreur est suffisamment faible pour que le fonctionnement de l'application ne soit pas perturbé, mais suffisamment large pour brouiller un éventuel canal auxiliaire.

Lorsqu'une ressource *n'est pas typée* comme étant une ressource sémantique la modulation consiste, dans un mode de réalisation, en la transmission d'une donnée chiffrée. En d'autres termes, toute ressource partagée par au moins deux applications qui ne possède pas de valeur sémantique (e.g. identifiant) est masquée, de la manière suivante : un code, unique pour chaque application, connu du système d'exploitation (ou du module de contrôle), sert à chiffrer la ressource. Le système d'exploitation (ou le module de contrôle) transmet la ressource chiffrée à l'application. Lorsque l'application souhaite utiliser la ressource, elle communique cette donnée chiffrée, que le système d'exploitation (ou le module de contrôle) déchiffre (et éventuellement chiffre à nouveau, différemment, pour la transmettre à une application tierce). Dans d'autres modes de réalisation, d'autres processus de masquage peuvent être employés : par exemple plutôt que de chiffrer la donnée non sémantique, il est possible d'y donner accès par un processus translatif, consistant à fournir un accès par pointeur, ledit pointeur étant représentatif d'une adresse qui est modifiée à chaque accès à la ressource. Ainsi, par exemple, plutôt que de transmettre une valeur d'une ressource, on transmet un pointeur, pointant vers la ressource. L'astuce consiste, préalablement à cette transmission, à recopier la ressource dans une zone mémoire différente à chaque fois. Dès lors, on transmet un pointeur qui pointe vers une zone mémoire différente à chaque fois de sorte qu'une application courante recevra un pointeur vers une zone mémoire différente de celle pointée vers le pointeur transmis à une autre application. Une fois utilisé par l'application, la zone mémoire contenant la ressource est effacée (par exemple remplacée par des instructions nulles).

### 5.2.1. Masquage des données non sémantiques par chiffrement

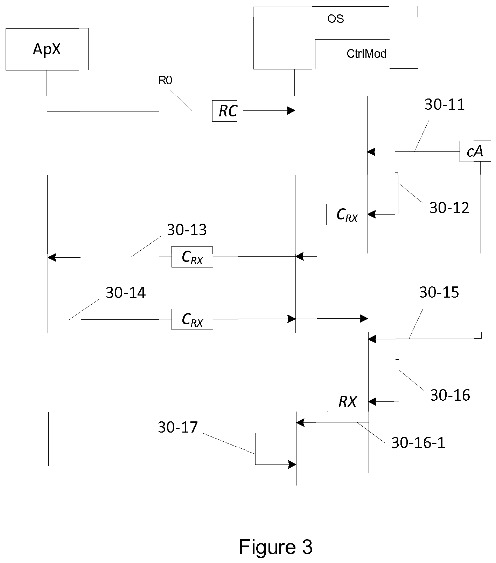

Afin de masquer les données n'ayant pas de valeur sémantique, le système d'exploitation utilise une procédure de chiffrement symétrique. Cette procédure peut être un chiffrement par XOR. Chaque application dispose d'un code unique déterminé par le système d'exploitation et gardé secret. Ce code peut être déterminé au lancement de l'application, ou au démarrage de l'appareil, ou à la première utilisation d'une ressource partagée. Ce code peut être choisi par exemple comme un nombre aléatoire de taille suffisante. Le principe de masquage de données non sémantiques (30-1) est décrit en relation avec la figure 3.

Lorsque qu'une application *AAp* requiert (R0) la ressource partagée *RX,* la méthode suivante est mise en œuvre :
- le module de contrôle récupère (30-11) (par exemple en provenance de la table des ressources, voir précédemment) le code *cA* correspondant à programme ApX ;
- le module de contrôle calcule (30-12) le chiffré *C_{RX}* = *E(X, cA)* de la ressource courante (RC) par *cA* ;
- le module de contrôle (ou le système d'exploitation) transmet (30-13) *C_{RX}* à programme ApX ;

Ainsi, ce n'est pas la ressource courante (RC) en elle-même qui est transmise à l'application appelante *(AAp),* mais un chiffré de la ressource. Par exemple, lorsque la ressource correspond à une adresse mémoire, l'application requiert, auprès du système d'exploitation, un emplacement en mémoire. Le système d'exploitation (en utilisant le module de contrôle) transmet, non pas l'adresse, mais un chiffré de celle-ci.

Lorsque programme ApX souhaite (par la suite ou immédiatement) utiliser la ressource partagée, la méthode suivante est mise en œuvre :
- programme ApX transmet (30-14) le chiffré *C_{RX}* au système d'exploitation (qui la transmet au module de contrôle) ;
- le module de contrôle (30-15) récupère le code cA correspondant à programme ApX, par exemple dans la table de ressources ;
- le module de contrôle (30-16) déchiffre *RX* = *E¹(C_{RX}, cA)* et récupère la valeur de *RX;*
- optionnellement, le module de contrôle transmet (30-16-1) la valeur *RX* au système d'exploitation (lorsque le module de contrôle est indépendant du système d'exploitation) ;
- système d'exploitation effectue (30-17) l'opération demandée par programme ApX sur la ressource courante (RC).

Ainsi, par exemple, lorsque l'application souhaite écrire à l'adresse mémoire *RX,* elle transmet l'adresse *C_{RX}* au système d'exploitation (avec la valeur à écrire à cette adresse). Le système d'exploitation ou le module de contrôle (en fonction de la configuration), déchiffre *C_{RX}* et effectue l'écriture en mémoire.

Lorsqu'une deuxième application (par exemple *BAp*) souhaite accéder à la ressource courante (RC), les mêmes étapes que celles décrites précédemment sont mise en œuvre avec une différence : le module de contrôle se charge de chiffrer (et de déchiffrer) la ressource avec un code cB correspondant à l'application *BAp.*

Ce masquage est transparent pour les applications. Ce masquage permet également de perturber de manière importante le travail d'observation d'un attaquant car celui-ci ne peut pas, même s'il contrôle une application (par exemple *AAp*), connaître réellement les valeurs des ressources non sémantiques.

Les ressources partagées n'ayant pas de valeur sémantique sont par exemple : numéros de série, identifiants, adresses mémoire, numéro de processus, etc.

### 5.2.2. Masquage des données sémantiques

Pour les données ayant une valeur sémantique, le masquage consiste à transmettre aux applications une valeur entachée d'une erreur. Cette erreur est déterminée par la variabilité de la donnée : une donnée susceptible de varier rapidement (e.g. horloge rapide) subira une plus forte correction qu'une donnée susceptible de varier lentement (e.g. jour de l'année).

Ce masquage impacte les applications, et ne peut pas nécessairement s'appliquer à toutes les données, mais il a peu d'incidence lorsque les données portent sur des mesures physiques (e.g. puissance du signal NFC). Il est à noter que toutes les applications reçoivent une information légèrement différente. Ainsi, par exemple, pour une application qui requiert une information relative à la quantité de mémoire vive disponible au sein du terminal, le procédé décrit précédemment est mise en œuvre. Il comprend l'identification de la ressource demandée et l'obtention d'un paramètre de modulation de cette ressource. Le paramètre de modulation typique pour cette ressource est une fonction d'obtention d'un nombre aléatoire ou non prévisible. Ainsi, avant de fournir une valeur relative à cette ressource, on obtient un nombre aléatoire (éventuellement borné) ; ce nombre aléatoire est ensuite ajouté ou soustrait de la quantité réelle de mémoire disponible ; pour finir le résultat du calcul précédent est transmis au programme appelant. Un autre programme appelant ne pourra ainsi pas obtenir la même valeur que celle précédemment transmise. Cet exemple peut également s'appliquer à la charge du processeur principal du dispositif ou à la charge d'un processeur secondaire (par exemple un processeur de chiffrement et/ou un processeur de traitement de données vidéo).

D'autres ressources partagées ayant une valeur sémantique sont par exemple : mémoire de masse disponible, heure, consommation électrique, niveau de la batterie, etc.

Ainsi, avec cette modulation des valeurs sémantique, un programme attaquant (malveillant) ne peut pas, de manière simple, suivre les évolutions et/ou les modifications qui surviennent dans le comportement du dispositif. Ainsi, il est difficile de suivre le comportement d'un programme spécifique qui est exécuté sur le dispositif et donc il est difficile de mener une attaque par canaux cachés.

### 5.3. Blocages mutuels des processus

Dans cette section, on présente le mécanisme de blocage d'accès aux ressources.

Comme présenté précédemment, on dispose de deux types de blocage : soit un blocage bidirectionnel, soit un blocage monodirectionnel.

Dans le blocage bidirectionnel, on effectue un blocage complet de la ressource tant qu'elle est utilisée par un processus courant. Cela signifie qu'aucun autre processus n'est autorisé à obtenir l'accès à la ressource tant que celle-ci est utilisée par le processus courant. Pour pallier cette absence d'accès à la ressource, le module de contrôle, confronté à la réception d'une requête d'accès à la ressource par un autre processus, met en œuvre une boucle d'attente au cours de laquelle l'autre processus est mis en attente de l'accès à la ressource. Lorsque l'accès à la ressource est libéré par le processus courant, le module de contrôle autorise l'accès à l'autre processus.

Dans le blocage monodirectionnel, on effectue une exclusion mutuelle différentiée en fonction de l'opération réalisée par le processus courant. Ainsi, dans un mode de réalisation particulier, le mécanisme d'exclusion mutuel obéit à la règle suivante : pour tout canal, une application bloque l'accès en lecture (respectivement en écriture) tant qu'elle maintient l'accès en écriture (respectivement en lecture).

Cette notion est à entendre au sens large : par exemple, une application qui demande à lire la charge du processeur, si elle y a accès, bloque ce faisant l'exécution d'autres applications ou processus (qui seraient susceptibles d'en modifier la valeur). On comprend, au travers de cet exemple, qu'un autre processus que le processus courant n'a pas directement accès à la ressource « charge processeur ». En revanche, le simple fait de lancer un nouveau processus peut modifier la charge processeur, et ainsi donner une indication sur l'élévation de la charge du processeur au processus courant qui tente d'avoir accès à celle-ci.

Ainsi, ce blocage consiste ainsi à imposer que toute application demandant un accès à un mode de communication en lecture bloque les autres applications qui souhaiteraient écrire par ce mode, et réciproquement que toute écriture bloque une tentative de lecture sur le même mode.

De manière générale, toute ressource peut être bloquée : par exemple, si une application utilise un microphone, l'accès aux périphériques produisant du son est bloqué à toutes les autres applications. (Dans certains contextes, l'imprimante embarquée du terminal peut produire du son).

Des exceptions peuvent être admises lorsque des périphériques de capture et d'émission ont des domaines très différents (e.g. écran et capteur NFC, qui utilisent tous deux des pans disjoints du spectre électromagnétique).

Cette exclusion mutuelle est assurée par le module de contrôle d'accès du système d'exploitation. Alternativement, plutôt qu'un blocage strict, le module de contrôle d'accès du système d'exploitation peut différer l'exécution des applications à risque.

### 5.4. Autres caractéristiques et avantages

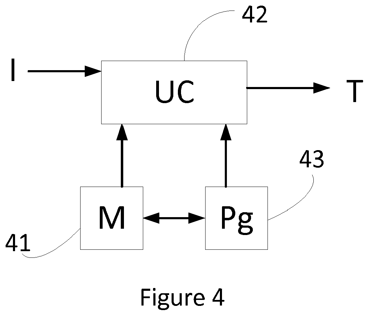

On décrit, en relation avec la figure 4, un dispositif électronique mis en œuvre pour contrôler l'utilisation de ressources, selon le procédé décrit préalablement.

Par exemple, le dispositif électronique comprend une mémoire 41 constituée d'une mémoire tampon, une unité de traitement 42, équipée par exemple d'un microprocesseur, et pilotée par le programme d'ordinateur 43, mettant en œuvre un procédé contrôle. À l'initialisation, les instructions de code du programme d'ordinateur 43 sont par exemple chargées dans une mémoire avant d'être exécutées par le processeur de l'unité de traitement 42. L'unité de traitement 42 reçoit en entrée au moins une donnée représentative d'une ressource à laquelle une application souhaite accéder. Le microprocesseur de l'unité de traitement 42 met en œuvre les étapes du procédé, selon les instructions du programme d'ordinateur 43 pour moduler l'accès à la ressource, au besoin en adjoignant un blocage de ladite ressources pour d'autres applications. Comme explicité, la modulation de l'accès fait appel à une structure de données comprenant, pour des ressources, des paramètres de modulation.

Pour cela, le dispositif électronique comprend, outre la mémoire tampon 41, des moyens de communications, tels que des modules de communication réseau, des moyens de transmission de données et éventuellement un processeur de chiffrement dédié.

L'ensemble de ces moyens peut se présenter sous la forme d'un processeur particulier, modulaire, implémenté au sein du dispositif, ledit processeur étant un processeur sécurisé. Selon un mode de réalisation particulier, ce dispositif électronique met en œuvre une application particulière qui est en charge de la réalisation du chiffrement et de la transmission de données, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

## Revendications

1. Procédé de contrôle d'accès à des ressources préalablement identifiées, procédé mis en œuvre par un dispositif électronique comprenant des moyens d'accès auxdites ressources à contrôler, le procédé comprenant :
- une étape de réception (10), en provenance d'un programme (ApX), d'une requête d'accès (RQ) à une ressource courante (RC) ;
- une étape d'obtention (20) d'au moins un paramètre (PX) d'accès à ladite ressource (RC) courante au sein d'une structure de données de caractérisation de ressources (StrCR), ladite étape d'obtention (20) dudit au moins un paramètre (PX) comprenant :
- une étape d'identification (20-1) de la ressource courante (RC) dans la structure de données de caractérisation de ressources (StrCR) en fonction d'un identifiant de ressource (IdX), le procédé étant **caractérisé en ce que** ladite étape d'obtention (20) dudit au moins un paramètre comprend en outre :
- une étape d'obtention (20-2), au sein de ladite structure de données, d'un indicateur de sémanticité (SemX) et d'au moins un paramètre de modulation (PX-1, PX-2, PX-3); l'indicateur de sémanticité indiquant si une ressource est de type sémantique ou non sémantique, une ressource de type sémantique appartenant à un groupe comprenant :
- une quantité de mémoire vive disponible,
- une quantité de mémoire de masse disponible,
- une puissance d'un signal reçu,
- une heure, une date, une données d'horloge,
- une consommation électrique,
- un niveau de batterie,
- un niveau de charge d'un processeur,
une ressource de type non-sémantique appartenant à un groupe comprenant :
- un identifiant,
- une adresse mémoire,
- un numéro de processus,
- un numéro de série, et le procédé étant **caractérisé en ce qu'**il comprend en outre :
- une étape de modulation (30) d'accès à ladite ressource courante (RC) en fonction dudit au moins un paramètre d'accès (PX) comprenant l'indicateur de sémanticité (SemX) et ledit au moins un paramètre de modulation (PX-1, PX-2, PX-3).

2. Procédé de contrôle d'accès selon la revendication 1, **caractérisé en ce qu'**en fonction de l'indicateur de sémanticité (SemX), l'étape de modulation (30), comprend :
- une mise en oeuvre d'une étape de masquage (30-1) de donnée non sémantique ; ou
- une mise en oeuvre d'une étape de masquage (30-2) de donnée sémantique.
- l'une et l'autre de ces deux étapes de masquage étant mise en œuvre en fonction des paramètres de modulation (PX-1, PX-2, PX-3).

3. Procédé de contrôle d'accès selon la revendication 2, **caractérisé en ce que** l'étape de masquage (30-1) de donnée non sémantique comprend :
- une étape d'obtention (30-11) d'un code cA correspondant au programme ApX ;
- une étape de calcul (30-12) d'un chiffré *C_{RX}* = *E(RC, cA)* de la ressource courante (RC) par *cA* ;
- une étape de transmission (30-13) du chiffré *C_{RX}* audit programme ApX ;

4. Procédé de contrôle d'accès selon la revendication 2, **caractérisé en ce que** l'étape de masquage (30-1) de donnée non sémantique comprend :
- une étape de réception (30-14), en provenance du programme ApX, d'un chiffré *C_{RX}* de la ressource courante RC ;
- une étape d'obtention (30-15) d'un code cA correspondant au programme ApX ;
- une étape de déchiffrement (30-16) déchiffre *RC = E⁻¹(C_{RX}, cA)* délivrant la valeur de la ressource courante *RC*;
- une étape de mise en œuvre (30-17) d'une opération requise par le programme ApX sur la ressource courante (RC).

5. Module de contrôle d'accès à des ressources préalablement identifiées, module mis en œuvre au sein d'un dispositif électronique comprenant des moyens d'accès auxdites ressources à contrôler, le module comprenant :
- des moyens de réception (10), en provenance d'un programme (ApX), d'une requête d'accès (RQ) à une ressource courante (RC) ;
- des moyens d'obtention (20) d'au moins un paramètre (PX) d'accès à ladite ressource (RC) courante au sein d'une structure de données de caractérisation de ressources (StrCR) comprenant :
- des moyens d'identification (20-1) de la ressource courante (RC) dans la structure de données de caractérisation de ressources (StrCR) en fonction d'un identifiant de ressource (IdX), le module étant **caractérisé en ce que** les moyens d'obtention (2) comprennent en outre :
- des moyens d'obtention (20-2), au sein de ladite structure de données, d'un indicateur de sémanticité (SemX) et d'au moins un paramètre de modulation (PX-1, PX-2, PX-3) l'indicateur de sémanticité indiquant si une ressource est de type sémantique ou non sémantique, une ressource de type sémantique appartenant à un groupe comprenant :
- une quantité de mémoire vive disponible,
- une quantité de mémoire de masse disponible,
- une puissance d'un signal reçu,
- une heure, une date, une données d'horloge,
- une consommation électrique,
- un niveau de batterie,
- un niveau de charge d'un processeur,
une ressource de type non-sémantique appartenant à un groupe comprenant :
- un identifiant,
- une adresse mémoire,
- un numéro de processus,
- un numéro de série, et le module étant **caractérisé en ce qu'**il comprend en outre :
- des moyens de modulation (30) d'accès à ladite ressource courante (RC) en fonction dudit au moins un paramètre d'accès (PX) comprenant l'indicateur de sémanticité (SemX) et ledit au moins un paramètre de modulation (PX-1, PX-2, PX-3)..

6. Dispositif électronique du type comprenant un processeur, une mémoire vive et une mémoire de stockage, dispositif comprenant également un système d'exploitation, s'exécutant au sein de la mémoire vive et permettant l'accès à des ressources dudit dispositif électronique, dispositif **caractérisé en ce qu'**il comprend au moins un module de contrôle d'accès auxdites ressources tels que décrit en revendication 5.

7. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de contrôle d'accès selon la revendication 1, lorsqu'il est exécuté sur un ordinateur.

## Patentansprüche

1. Verfahren zum Kontrollieren des Zugangs zu zuvor identifizierten Ressourcen, Verfahren, das von einer elektronischen Vorrichtung umgesetzt wird, umfassend Mittel zum Zugang zu den zu kontrollierenden Ressourcen, wobei das Verfahren aufweist:
- einen Schritt des Empfangens (10) von einem Programm (ApX) einer Zugriffsanfrage (RQ) zu einer aktuellen Ressource (RC),
- einen Schritt des Erhaltens (20) mindestens eines Parameters (PX) des Zugangs zu der aktuellen Ressource (RC) innerhalb einer Datenstruktur zur Charakterisierung von Ressourcen (StrCR), wobei der Schritt des Erhaltens (20) des mindestens einen Parameters (PX) aufweist:
- einen Schritt des Identifizierens (20-1) der aktuellen Ressource (RC) in der Datenstruktur zur Charakterisierung von Ressourcen (StrCR) in Abhängigkeit von einer Ressourcenkennung (IdX),
wobei das Verfahren **dadurch gekennzeichnet ist, dass** der Schritt des Erhaltens (20) des mindestens einen Parameters ferner aufweist:
- einen Schritt des Erhaltens (20-2) innerhalb der Datenstruktur eines Indikators der Semantizität (SemX) und mindestens eines Modulationsparameters (PX-1, PX-2, PX-3), wobei der Indikator der Semantizität angibt, ob eine Ressource vom semantischen oder nicht-semantischen Typ ist, wobei eine Ressource vom semantischen Typ zu einer Gruppe gehört, umfassend:
- eine verfügbare RAM-Menge,
- eine verfügbare Menge an Massenspeicher,
- eine Leistung eines empfangenen Signals,
- eine Uhrzeit, ein Datum, Taktdaten,
- einen Stromverbrauch,
- einen Batteriestand,
- eine Auslastung eines Prozessors,
wobei eine Ressource vom nicht-semantischen Typ zu einer Gruppe gehört, umfassend:
- eine Kennung,
- eine Speicheradresse,
- eine Prozessnummer,
- eine Seriennummer
und wobei das Verfahren **dadurch gekennzeichnet ist, dass** es ferner aufweist:
- einen Schritt des Modulierens (30) des Zugangs zu der aktuellen Ressource (RC) in Abhängigkeit von dem mindestens einen Zugangsparameter (PX), umfassend den Indikator der Semantizität (SemX) und den mindestens einen Modulationsparameter (PX-1, PX-2, PX-3).

2. Verfahren zum Kontrollieren des Zugangs nach Anspruch 1, **dadurch gekennzeichnet, dass** der Schritt des Modulierens (30) in Abhängigkeit von dem Indikator der Semantizität (SemX) aufweist:
- ein Umsetzen eines Schrittes des Maskierens (30-1) von nicht-semantischen Daten oder
- ein Umsetzen eines Schrittes des Maskierens (30-2) von semantischen Daten,
- wobei der eine und der andere dieser zwei Schritte des Maskierens in Abhängigkeit von den Modulationsparametern (PX-1, PX-2, PX-3) umgesetzt wird.

3. Verfahren zum Kontrollieren des Zugangs nach Anspruch 2, **dadurch gekennzeichnet, dass** der Schritt des Maskierens (30-1) von nicht-semantischen Daten aufweist:
- einen Schritt des Erhaltens (30-11) eines Codes cA, der dem Programm ApX entspricht,
- einen Schritt des Berechnens (30-12) einer Verschlüsselung *C_{RX}* = *E(RC, cA)* der aktuellen Ressource (RC) durch *cA*,
- einen Schritt des Übertragens (30-13) der Verschlüsselung *C_{RX}* an das Programm ApX.

4. Verfahren zum Kontrollieren des Zugangs nach Anspruch 2, **dadurch gekennzeichnet, dass** der Schritt des Maskierens (30-1) von nicht-semantischen Daten aufweist:
- einen Schritt des Empfangens (30-14) einer Verschlüsselung *C_{RX}* der aktuellen Ressource RC von dem Programm ApX,
- einen Schritt des Erhaltens (30-15) eines Codes cA, der dem Programm ApX entspricht,
- ein Entschlüsselungsschritt (30-16) entschlüsselt *RC* = *E⁻¹ (C_{RX}, cA)* und liefert dabei den Wert der aktuellen Ressource RC,
- einen Schritt des Umsetzens (30-17) einer Operation, die vom ApX-Programm für die aktuelle Ressource (RC) gefordert wird.

5. Modul zum Kontrollieren des Zugangs zu zuvor identifizierten Ressourcen, Modul, das in einer elektronischen Vorrichtung umgesetzt ist, umfassend Mittel zum Zugang zu den zu kontrollierenden Ressourcen, wobei das Modul aufweist:
- Mittel zum Empfangen (10) von einem Programm (ApX) einer Zugriffsanfrage (RQ) zu einer aktuellen Ressource (RC),
- Mittel zum Erhalten (20) mindestens eines Parameters (PX) des Zugangs zu der aktuellen Ressource (RC) innerhalb einer Datenstruktur zur Charakterisierung von Ressourcen (StrCR), umfassend:
- Mittel zum Identifizieren (20-1) der aktuellen Ressource (RC) in der Datenstruktur zur Charakterisierung von Ressourcen (StrCR) in Abhängigkeit von einer Ressourcenkennung (IdX),
wobei das Modul **dadurch gekennzeichnet ist, dass** die Mittel zum Erhalten (20) ferner aufweisen:
- Mittel zum Erhalten (20-2) innerhalb der Datenstruktur eines Indikators der Semantizität (SemX) und mindestens eines Modulationsparameters (PX-1, PX-2, PX-3), wobei der Indikator der Semantizität angibt, ob eine Ressource vom semantischen oder nicht-semantischen Typ ist, wobei eine Ressource vom semantischen Typ zu einer Gruppe gehört, umfassend:
- eine verfügbare RAM-Menge,
- eine verfügbare Menge an Massenspeicher,
- eine Leistung eines empfangenen Signals,
- eine Uhrzeit, ein Datum, Taktdaten,
- einen Stromverbrauch,
- einen Batteriestand,
- eine Auslastung eines Prozessors,
wobei eine Ressource vom nicht-semantischen Typ zu einer Gruppe gehört, umfassend:
- eine Kennung,
- eine Speicheradresse,
- eine Prozessnummer,
- eine Seriennummer,
und wobei das Modul **dadurch gekennzeichnet ist, dass** es ferner aufweist:
- Mittel zum Modulieren (30) des Zugangs zu der aktuellen Ressource (RC) in Abhängigkeit von dem mindestens einen Zugangsparameter (PX), umfassend den Indikator der Semantizität (SemX) und den mindestens einen Modulationsparameter (PX-1, PX-2, PX-3).

6. Elektronische Vorrichtung des Typs, umfassend einen Prozessor, ein RAM und einen Speicher zur Speicherung, eine Vorrichtung, die auch ein Betriebssystem aufweist, das im RAM ausgeführt wird und den Zugang zu den Ressourcen der elektronischen Vorrichtung ermöglicht, Vorrichtung, die **dadurch gekennzeichnet ist, dass** sie mindestens ein Modul zum Kontrollieren des Zugangs zu diesen Ressourcen aufweist, wie in Anspruch 5 beschrieben.

7. Computerprogrammprodukt, das von einem Kommunikationsnetz herunterladbar ist und/oder auf einem computerlesbaren Aufzeichnungsmedium gespeichert ist und/oder von einem Mikroprozessor ausführbar ist, **dadurch gekennzeichnet, dass** es Programmcodeanweisungen zum Ausführen eines Verfahrens zum Kontrollieren des Zugangs nach Anspruch 1 aufweist, wenn es auf einem Computer ausgeführt wird.

## Claims

1. Method for controlling access to preliminarily identified resources, the method being implemented by an electronic device comprising means of access to said resources to be controlled, the method comprising:
- a step (10) for receiving, from a program (ApX), an access a request (RQ) for access to a current resource (RC);
- a step (20) for obtaining at least one access parameter (PX) to access to said current resource (RC) within a resource-characterizing data structure (StrCR) said step (20) of obtaining said at least one parameter (PX) comprising:
- a step (20-1) for identifying the current resource (RC) in the resource characterization data structure (StrCR) based on a resource identifier (IdX), the method being **characterized in that** said step (20) of obtaining said at least one parameter further comprises:
- a step (20-2) for obtaining, within said data structure, a semanticity indicator (SemX) and at least one modulation parameter (PX-1, PX-2, PX-3); the semanticity indicator indicating whether a resource is semantic or non-semantic, a semantic resource belonging to a group comprising:
- an amount of available RAM,
- an amount of available mass storage,
- a received signal strength,
- a time, a date, a clock data,
- a power consumption,
- a battery level,
- a load level of a processor,
a non-semantic resource belonging to a group comprising:
- an identifier,
- a memory address,
- a process number,
- a serial number, and the method being **characterized in that** it further comprises:
- a step (30) for modulating access to said current resource (RC) as a function of said at least one preliminarily obtained access parameter (PX) comprising the semanticity indicator (SemX) and said at least one modulation parameter (PX-1, PX-2, PX-3).

2. Method for controlling access according to claim 1, **characterized in that**, depending on the semanticity indicator (SemX), the modulation step (30) comprises:
- implementing of a step (30-1) for masking non-semantic data; or
- implementing of a step (30-2) for masking semantic data;
- implementing either one of these two masking steps as a function of the modulation parameters (PX-1, PX-2, PX-3).

3. Method for controlling access according to claim 2, **characterized in that** the step (30-1) for masking non-semantic data comprises:
- a step (30-11) for obtaining a code cA corresponding to the program ApX;
- a step (30-12) for computing an encrypted value C_{RX} = E(RC, cA) of the current resource (RC) by cA;
- a step (30-13) for transmitting the encrypted value C_{RX} to said program ApX.

4. Method for controlling access according to claim 2, **characterized in that** the step (30-1) for masking non-semantic data comprises:
- a step (30-14) for receiving an encrypted value C_{RX} of the current resource RC coming from the program ApX;
- a step (30-15) for obtaining a code cA corresponding to the program ApX;
- a step (30-16) of decryption RC = E⁻¹(C_{RX}, cA) delivering the value of the current resource RC;
- a step (30-17) for implementing an operation required by the program ApX on the current resource (RC).

5. Module for controlling access to preliminarily identified resources, module implemented within an electronic device comprising means of access to said resources to be controlled, the module comprising:
- means (10) for receiving a request (RQ), coming from a program (ApX), for access to a current resource (RC);
- means (20) for obtaining at least one access parameter (PX) to access to said current resource (RC) within a resource-characterizing data structure (StrCR) comprising:
- means (20-1) for identifying the current resource (RC) in the resource characterization data structure (StrCR) based on a resource identifier (IdX), the module being **characterized in that** said means (20) for obtaining said at least one parameter further comprises:
- means (20-2) for obtaining, within said data structure, a semanticity indicator (SemX) and at least one modulation parameter (PX-1, PX-2, PX-3); the semanticity indicator indicating whether a resource is semantic or non-semantic, a semantic resource belonging to a group comprising:
- an amount of available RAM,
- an amount of available mass storage,
- a received signal strength,
- a time, a date, a clock data,
- a power consumption,
- a battery level,
- a load level of a processor,
a non-semantic resource belonging to a group comprising:
- an identifier,
- a memory address,
- a process number,
- a serial number,
and the method being **characterized in that** it further comprises:
- means (30) for modulating access to said current resource (RC) as a function of said at least one preliminarily obtained access parameter (PX) comprising the semanticity indicator (SemX) and said at least one modulation parameter (PX-1, PX-2, PX-3).

6. Electronic device of the type comprising a processor, a random-access memory and a storage memory, the device also comprising an operating system, executed within the random-access memory and enabling access to resources of said electronic device, device **characterized in that** it comprises at least one module for controlling access to said resources as described in claim 5.

7. Computer program product downloadable from a communications network and/or stored on a computer-readable carrier and/or executable by a microprocessor, **characterized in that** it comprises program code instructions for executing a method for controlling access according to claim 1, when it is executed on a computer.
